# EUROPEAN PATENT APPLICATION

(11) **EP 4 644 907 A1**
(43) Date of publication of application: **05.11.2025**
(21) Application number: 23911321.0
(22) Date of filing: 10.10.2023
(51) Int. Cl.: G01N 35/00

(54) **AUTOMATIC ANALYSIS DEVICE**

(30) Priority: 26.12.2022 JP 2022208296
(71) Applicant: HITACHI HIGH-TECH CORPORATION, Tokyo 105-6409 (JP)
(72) Inventor: WADA, Kentaro, Tokyo 105-6409 (JP); KAKIKAWA, Kento, Tokyo 105-6409 (JP); NODA, Kazuhiro, Tokyo 105-6409 (JP)
(74) Representative: MERH-IP Matias Erny Reichl Hoffmann Patentanwälte PartG mbB
(86) International application number: PCT/JP2023/036661
(87) International publication number: WO 2024/142537

(57) **Abstract**

In an automatic analyzer 1, a detergent vessel 150, a standard solution vessel 151, a buffer solution vessel 130, a cleaning fluid vessel 131 and a displacement solution vessel 132 are divided and placed in zones on a group of analysis items basis on a floorboard 22 forming the underside of a housing 20, or alternatively, are grouped and placed into reagents used for the group of biochemical analysis items and reagents used for the group of immune analysis items different from the group of biochemical analysis items, or alternatively, are placed in horizontal positions to each other. Accordingly, the automatic analyzer with high maintainability and high reliability is provided in which the operational feeling of conventional products is maintained.

## Description

### Technical Field

This invention relates to an automatic analyzer.

### Background Art

The automatic analyzers such as a biochemical analyzer and an immune analyzers are known as apparatuses for analyzing samples such as blood and urine collected from patients. Here, a technique for reading an RFID tag attached to a vessel holding a solution such as a reagent is disclosed (see Patent Literature 1).

### Citation List

### Patent Literature

Patent Literature 1: WO2020/021829

### Summary of Invention

### Technical Problem

According to Patent Literature 1, regarding an alkaline detergent or an acidic detergent which are used in a mechanism related to a biochemical analysis item, a cleaning fluid, a displacement solution, or a buffer reaction solution which are used in a mechanism related to an immune analysis item, a reference electrode standard solution or a diluted solution used for measurement of an electrolyte item, or the like, it is necessary to devise an arrangement of flow passages connected to various mechanisms or reagent arrangement positions in order to secure reliability for preventing occurrence of an accident such as liquid leakage of a detergent or the like used for analysis or in order not to confuse a user at the time of replacement of a reagent.

Accordingly, an object of the present invention is to provide an automatic analyzer with high maintainability and high reliability.

### Solution to Problem

The present invention includes plural means for solving the above problems, and one example thereof is an automatic analyzer, which includes: a first analysis unit for analyzing a first group of analysis items; a second analysis unit for analyzing a second group of analysis items different from the first group of analysis items; and a housing containing the first analysis unit and the second analysis unit. When a first area including the first analysis unit and the second analysis unit, and a second area arranged vertically below the first area are configured, the second area is partitioned into a first zone that houses a first vessel containing a first liquid used in analysis in the first analysis unit, and a second zone that houses a second vessel containing a second liquid used in analysis in the second analysis unit, and the first vessel and the second vessel are arranged on a floorboard constituting an underside of the housing.

### Advantageous Effects of Invention

According to the present invention, it is possible to provide an automatic analyzer with high maintainability and high reliability while maintaining operational feeling of conventional products. Objects, configurations, and effects other than the above will be apparent from the description of the following embodiments.

### Brief Description of Drawings

[Fig. 1] Fig. 1 is a diagram illustrating an overview of an automatic analyzer according to an embodiment of the present invention.
[Fig. 2] Fig. 2 is a diagram illustrating an overview of doors in the automatic analyzer according to an embodiment.
[Fig. 3] Fig. 3 is a diagram illustrating the automatic analyzer with an open left door according to an embodiment.
[Fig. 4] Fig. 4 is a diagram illustrating the automatic analyzer with an open right door according to an embodiment.
[Fig. 5] Fig. 5 is a sectional view of the analyzer taken below from plane A in Fig. 2.
[Fig. 6] Fig. 6 is a flowchart illustrating the flow of replacement working of reagent vessels in the automatic analyzer according to an embodiment.

### Description of Embodiments

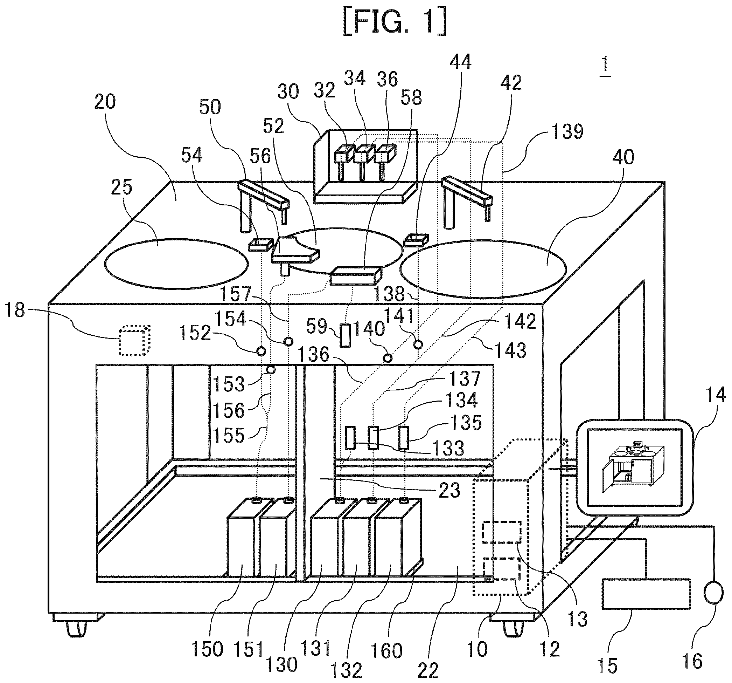

Hereinafter, embodiments of an automatic analyzer will be described with reference to Fig. 1 to Fig. 6. In the drawings used herein, the same or similar reference signs are given to the same or corresponding elements, and the repeated description of these elements sometimes may be omitted.

In the following embodiment, a group of biochemical analysis item is exemplified as a first group of analysis items, and a group of immune analysis items is exemplified as a second group of analysis items different from the first group of analysis items, but the first group of analysis items and the second group of analysis items are not limited to these items, and can be selected as appropriate.

First, an overall configuration of the automatic analyzer will be described with reference to Fig. 1. Fig. 1 is a diagram illustrating an overview of the automatic analyzer. In the automatic analyzer (also referred to as a compound type automatic analyzer) which performs two measurements of a first analysis item and a second analysis item in one housing, the arrangement of vessels relating to a reagent commonly used for a plurality of analysis items (hereinafter referred to as a system reagent) among liquids used for analysis and units relating to the system reagent are illustrated. It is to be noted that in contrast with the system reagent commonly used for the plurality of analysis items, there is a reagent used for each analysis item, which is hereinafter referred to as an assay reagent.

The automatic analyzer 1 is a device serving for analyzing a sample with the usage of a reagent corresponding to a specified analysis item, and includes a sample disc 25, a sample dispenser mechanism 50, a reagent disc 40, a reagent dispenser mechanism 42, a reaction bath 52, an immune measurement unit 30, an ISE measurement unit 58, a vessel cleaning mechanism 56 for cleaning a reaction vessel for biochemical analysis, a reader 18 for reading an RFID, a control apparatus 10, and the others.

The sample disc 25 has a structure capable of holding a plurality of sample vessels (not shown) containing samples to be analyzed in the first analysis item and the second analysis item in an annular manner, and is provided with an access position (sample aspiration position) of the sample dispenser mechanism 50. The sample disc 25 rotates immediately before the sample dispenser mechanism 50 aspirates the sample to be analyzed, thereby to cause the sample vessel to transport to the sample aspiration position.

The reaction bath 52 has positions, in an annular manner, for holding a reaction vessel used for biochemical analysis and ISE analysis and a disposable reaction vessel used for immune analysis. Hereinafter, unless otherwise specified, "reaction vessel" means both a reaction vessel used for biochemical analysis and ISE analysis and a disposable reaction vessel used for immune analysis. The reaction bath 52 is temperature-controlled to accelerate the reaction between the sample and the reagent, and has a rotation drive mechanism to move the reaction vessel on the reaction bath 52 to a specified position.

The sample dispenser mechanism 50 is configured to include a rotation drive mechanism, a vertical drive mechanism, and a sample probe in order to access a reaction vessel placed at a sample discharge position where the sample is dispensed on the reaction bath 52. The rotation drive mechanism and the vertical drive mechanism cause the sample dispenser mechanism 50 to move between the sample aspiration position and the sample discharge position, and the sample is aspirated at the sample aspiration position and is discharged into the reaction vessel on the reaction bath 52. After discharging the sample, the sample dispenser mechanism 50 moves to a sample probe cleaning bath 54 to be washed with a detergent which is contained in a detergent vessel 150 and whose supply via a flow passage 155 is controlled by opening and closing an electromagnetic valve 152, and is shifted to the next sample dispensing operation.

The reagent disc 40 has a structure capable of holding a plurality of reagent vessels (not shown) in an annular manner, each of which contains a reagent for reacting with a sample to generate a reaction solution, and is provided with an access position (reagent aspiration position) for a reagent dispenser mechanism 42. The reagent disc 40 rotates immediately before the reagent dispenser mechanism 42 aspirates the reagent, thereby causing the reagent vessel to transport to the sample aspiration position. The reagent disc 40 also includes a cooling mechanism for keeping the reagent vessel cool. Furthermore, the reagent disc 40 may be configured by arranging a plurality of reagent vessels in a double annular manner.

The reagent vessels may be constituted of a plurality of different reagent bottles. If the reagent vessels have different shapes, dedicated positions may be provided to hold each reagent vessel, or one position may be provided so as to be capable of holding both reagent vessels.

The reagent dispenser mechanism 42 is comprised of a rotation drive mechanism, a vertical drive mechanism, and a reagent probe in order to be capable of accessing a reaction vessel placed at a reagent discharge position where the reagent on the reaction bath 52 is dispensed. The rotation drive mechanism and the vertical drive mechanism cause the reagent dispenser mechanism 42 to move between a reagent aspiration position and a reagent discharge position, and the reagent is aspirated at the reagent aspiration position and is discharged into the reaction vessel on the reaction bath 52. After discharging the reagent, the reagent dispenser mechanism 42 moves to a reagent probe cleaning bath 44 to be washed with a detergent which is contained in a cleaning fluid vessel 131 and whose supply via flow passages 137 and 138 is controlled by opening and closing an electromagnetic valve 141, and is shifted to the next reagent dispensing operation.

It is to be noted that the sample dispenser mechanism 50 and the reagent dispenser mechanism 42 are not limited to the configuration in which each position is accessed by rotational motion, but may be a configuration in which each position is accessed by a linear motion.

After the sample and the reagent are dispensed, a reaction therebetween is promoted on the temperature-controlled reaction bath 52. Upon completion of the reaction process of the sample and the reagent on the reaction bath 52, the reaction bath 52 is brought into rotation, and the reaction vessel containing the reaction solution of the biochemical item undergone measurement of a transmitted light by a photometer (not shown) provided in the vicinity of the reaction bath 52. The measurement result is transmitted to the control apparatus 10.

In a case where the measurement item is for ISE analysis, the reaction vessel into which the sample for ISE analysis is dispensed is moved to a sample aspiration position of the ISE measurement unit 58. The sample is aspirated into a flow passage passing through the inside of an ISE electrode by a syringe 59 of the ISE measurement unit 58. Thereafter, a potential difference is measured between the ISE electrode and a reference electrode which aspirates the standard solution which is held in a standard solution vessel 151 and whose supply is controlled by opening and closing of the electromagnetic valve 154 provided on a flow passage 157. Information on the resulting potential difference is transmitted to the control apparatus 10. The flow passage in the ISE measurement unit 58 used for the analysis is washed with a standard solution or pure water for use in the next analysis.

In a case where the measurement item is an immune analysis item, the disposable reaction vessel on the reaction bath 52 which contains a reaction solution for the immune analysis item is moved to a reaction vessel transport position, and is transported to the immune measurement unit 30 by a reaction vessel transport mechanism (not illustrated). A B/F separation is carried out for separating an unreacted component and a reaction component from the liquid in which the sample and the reagent are reacted in the disposable reaction vessel transported into the immune measurement unit 30, then a reaction solution aspiration nozzle aspirates the reaction solution, the reaction solution is sent to an immune cell (also referred to as a flow cell), a signal is measured, and a measurement result is transmitted to the control apparatus 10.

In the immune measurement unit 30, a buffer solution nozzle 32, a cleaning fluid nozzle 34, a displacement solution nozzle 36, a B/F separation unit, a reaction solution aspiration nozzle, and an immune cell are mounted.

A buffer solution in a buffer solution vessel 130 is supplied to the buffer solution nozzle 32 through a flow passage 136 by aspiration/discharge operation of a syringe 133. On the flow passage 136, an electromagnetic valve 140 is arranged. The buffer solution is discharged to a reaction vessel disposed in the B/F separation unit.

The cleaning fluid nozzle 34 is supplied with a cleaning fluid in the cleaning fluid vessel 131 through the flow passage 137 by discharge operation of a pump 134. The cleaning fluid discharged from the cleaning fluid nozzle 34 is supplied into an inside of the immune cell in which the measurement of the reaction solution by the reaction solution aspiration nozzle has completed, and cleaning operation is performed. The cleaning fluid in the cleaning fluid vessel 131 is supplied to the reagent probe cleaning bath 44 by discharge operation of the pump 134 through the flow passage 138 branched from the flow passage 137. The electromagnetic valve 142 is arranged on the flow passage 137 at a portion closer to the cleaning fluid nozzle 34 than the branched portion with the flow passage 138, and the electromagnetic valve 141 is arranged on the flow passage 138.

A displacement solution in a displacement solution vessel 132 is supplied to the displacement solution nozzle 36 through a flow passage 139 by discharge operation of a pump 135. The displacement solution discharged from the displacement solution nozzle 36 is aspirated into the reaction solution aspiration nozzle and is supplied into the immune cell before measurement in the immune cell and after cleaning thereof with a cleaning fluid. An electromagnetic valve 143 is arranged on the flow passage 139.

The residues in the reaction vessel on the reaction bath 52 which have been used for the biochemical analysis and the ISE analysis are discharged by the vessel cleaning mechanism 56. Thereafter, the reaction vessel is cleaned with a detergent which is contained in the detergent vessel 150 and whose supply is controlled by opening and closing of an electromagnetic valve 153 via a flow passage 156 branched from the flow passage 155, and is used for the next analysis.

In the automatic analyzer 1 of the present embodiment, the system reagent used for the group of biochemical analysis items is a detergent, and the system reagents for the group of immune analysis items are a buffer solution, a cleaning fluid, and a displacement solution. In addition, the standard solution vessel 151 which contains the standard solution of the system reagent for ISE analysis is arranged next to the detergent vessel 150.

The reader 18 reads a tag that stores reagent related information attached to the reagent vessel or a tag that stores information related to the automatic analyzer 1 attached to an object such as a consumable used in the automatic analyzer 1 or a part of a device configuration.

In a housing 20, there are accommodated a biochemical analysis unit including the reaction bath 52, the vessel cleaning mechanism 56 and a photometer, the ISE measurement unit 58, and the immune measurement unit 30.

The automatic analyzer 1 includes the control apparatus 10 which controls the operation of each of devices in the automatic analyzer 1 that typically include the sample disc 25 and the sample dispenser mechanism 50.

The control apparatus 10 may be comprised of a computer having input devices such as a display 14, a keyboard 15, and a mouse 16, a storage 13, a controller 12 made up of a CPU, and memory, may be comprised of a single computer, or multiple computers, and is not particularly limited thereto.

In the present embodiment, the display 14 displays a replacement procedure for the detergent vessel 150, the standard solution vessel 151 or the buffer solution vessel 130, the cleaning fluid vessel 131, and the displacement solution vessel 132. The details will be described later with reference to Fig.1.

In the present embodiment, the keyboard 15 and the mouse 16 are used for inputting related to requests by a user to replace the detergent vessel 150, the standard solution vessel 151 or the buffer solution vessel 130, the cleaning fluid vessel 131, and the displacement solution vessel 132.

Instead of or in addition to the keyboard 15 and the mouse 16, a touch panel type display may be available using the display 14 to serve as both a display and an input device.

The control of the operation of each device by the controller 12 of the control apparatus 10 is executed based on the various programs recorded in the storage. It is to be noted that the control processing of the operation by the controller 12 may be executed based on a single integrated program, or multiple programs as an integration of programs, or a combination of the single integrated program and the multiple programs. In addition, part or all of the programs may be implemented by using dedicated hardware, or may be modularized.

The above is the configuration of the automatic analyzer 1 of the present embodiment.

It is to be noted that the configuration of the automatic analyzer is not limited to the configuration illustrated in Fig. 1 in which reactions in both the reaction vessel for the first analysis items and the disposable reaction vessel for the second analysis items are carried out in the reaction bath 52, but may be configured to include an incubator for the second analysis items in addition to the reaction bath 52. In addition, although the sample dispenser mechanism and the reagent dispenser mechanism are commonly used for the first analysis item and second analysis item, a configuration may be available in which the sample dispenser mechanisms and the reagent dispenser mechanisms are provided individually for the items.

Also, the first analysis item has been treated as the biochemical item and the second analysis item has been treated as the immune item, but other analysis items may be used as long as they are different from each other.

In addition, different reagents have been used for the first analysis item and the second analysis item, but a common reagent may be used, and there is no particular limitation.

Furthermore, the automatic analyzer is not limited to the configuration having a single analysis module as illustrated in Fig. 1, but may be configured to connect two or more analysis modules capable of measuring various identical or different analysis items and pre-processing modules for performing pre-processing via a transport device.

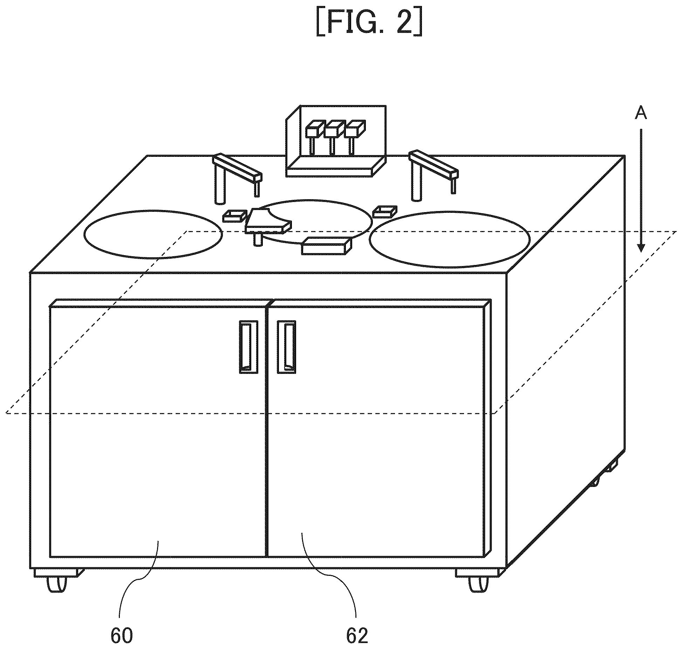

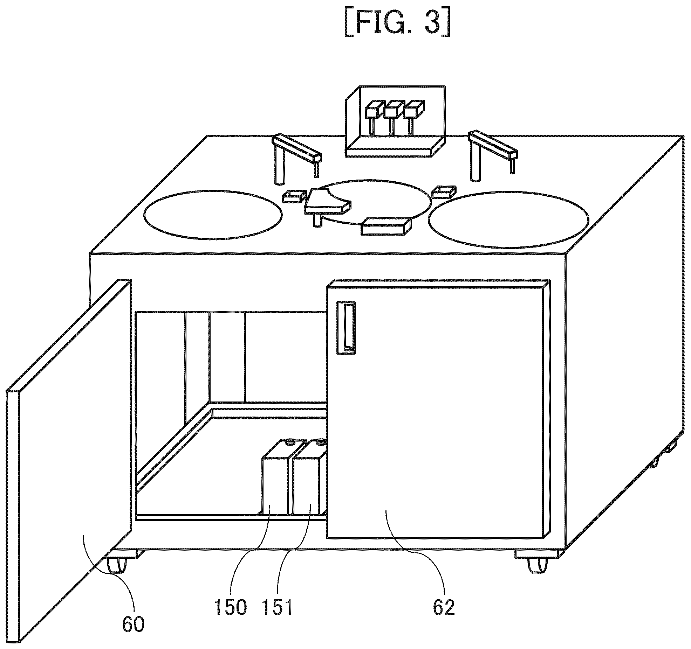

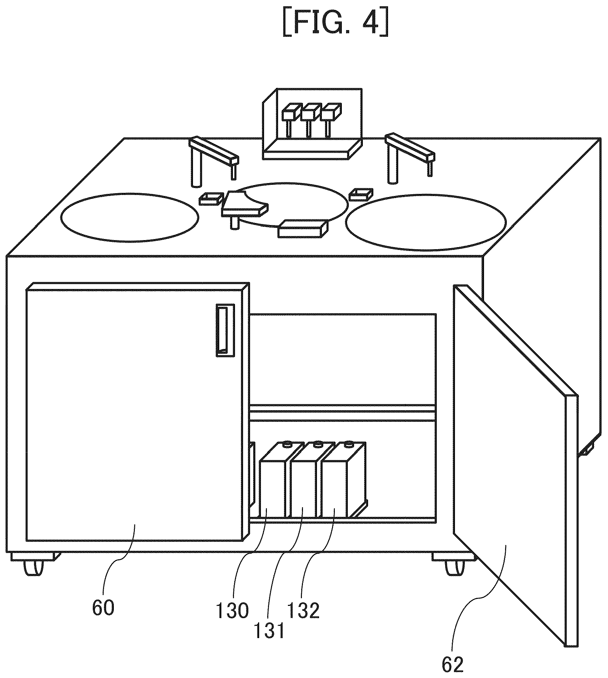

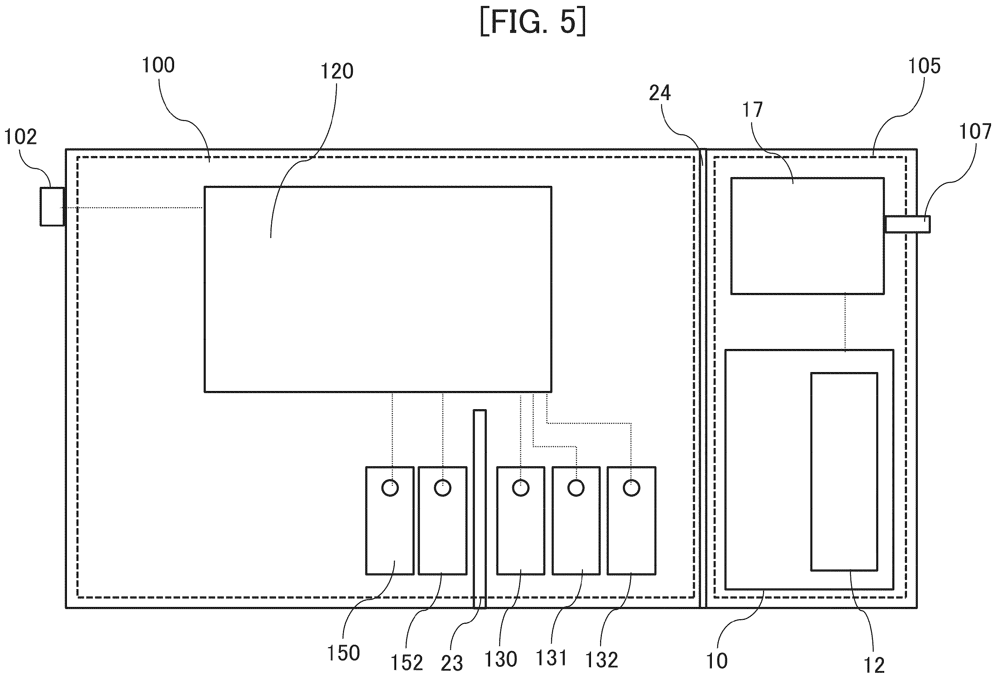

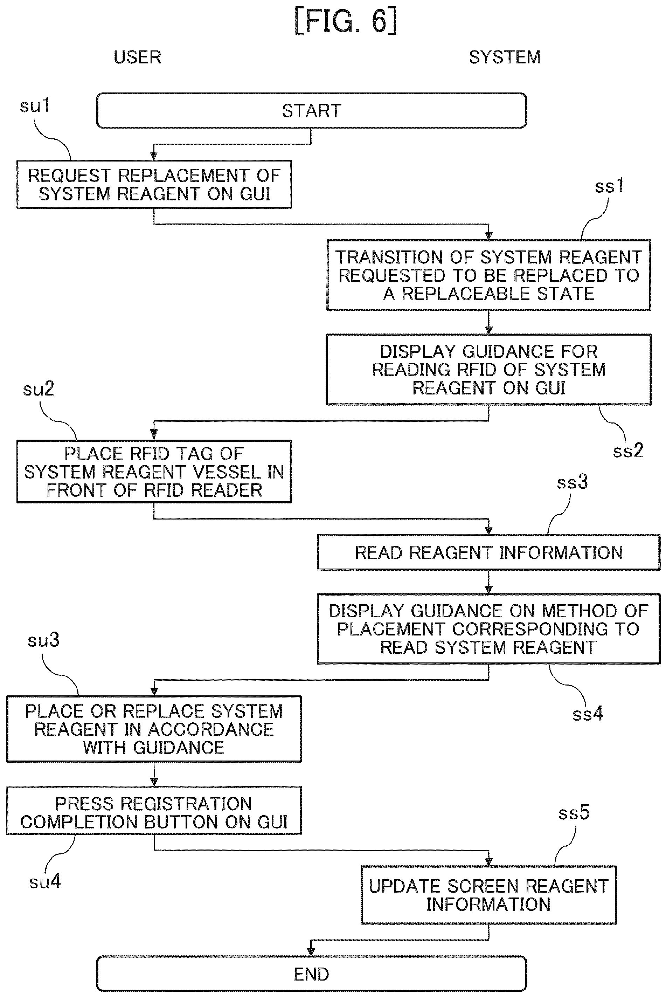

Next, the characteristic configuration of the present embodiment will be described with reference to Fig. 2 and Subsequent drawings. Fig. 2 is a diagram illustrating an overview of doors in the automatic analyzer 1, Fig. 3 is a diagram illustrating the automatic analyzer with an open left door, Fig. 4 is a diagram illustrating the automatic analyzer with an open right door, Fig. 5 is a sectional view of the analyzer taken below from plane A in Fig. 2, and Fig. 6 is a flowchart illustrating the flow of replacement working of system reagent.

In the automatic analyzer 1, an area for the system reagent is divided for each analysis item group. More specifically, when the housing 20 is set with a first area including the biochemical analysis unit and the immune measurement unit 30 that handle the sample, the reagent, and the reaction solution to perform measurement and a second area arranged on the lower side of the first area in the vertical direction, the second area is divided into a first zone (the back of the left door 60) that houses the detergent vessel 150 containing the first liquid used for analysis of the biochemical analysis unit and a second zone (the back of a right door 62) that houses the buffer solution vessel 130, the cleaning fluid vessel 131, and the displacement solution vessel 132 which contain a second liquid used in analysis of the immune measurement unit 30. In the present embodiment, the standard solution vessel 151 used in analysis of the ISE measurement unit 58 is housed in the first zone.

After such a division into the first zone and the second zone, the detergent vessel 150, the standard solution vessel 151, the buffer solution vessel 130, the cleaning fluid vessel 131, and the displacement solution vessel 132 are arranged on a surface of a floorboard 22 that constitutes a bottom surface of the housing 20.

Similarly, on the floorboard 22 which is the same level surface, a tray 160 on which the system reagent vessels are mounted is provided, and the detergent vessel 150, the standard solution vessel 151, the buffer solution vessel 130, the cleaning fluid vessel 131, and the displacement solution vessel 132 are arranged in horizontal positions to each other on the tray 160.

Although the system reagent is horizontally arranged on the tray 160 on the floorboard 22 which constitutes the bottom of the housing 20, the system reagent may be horizontally arranged on another mechanism in the housing 20 regardless of presence or absence of the usage of the tray.

Also, a partition wall 23 is provided for separating the detergent vessel 150 and the standard solution vessel 151 in the first zone from the buffer solution vessel 130, the cleaning fluid vessel 131, and the displacement solution vessel 132 in the second zone, making it possible, at the time of replacement, to reliably prevent a contamination by reagent scattering and a mixing-up of the reagents.

In addition, the flow passages 155, 156, and 157 (first flow passages) connecting the detergent vessel 150 and the standard solution vessel 151 to the sample probe cleaning bath 54, the vessel cleaning mechanism 56, and the ISE measurement unit 58, and the flow passages 136, 137, 138, and 139 (second flow passages) connecting the buffer solution vessel 130, the cleaning fluid vessel 131, and the displacement solution vessel 132 to the immune measurement unit 30 are arranged to be prevented from crossing each other.

Further, as illustrated in Fig. 2, provided are the left door 60 located to allow a user to access the first zone and not to allow the user to access the second zone, and the right door 62 located not to allows the user to access the first zone and to allow the user to access the second zone.

As to the left door 60 and the right door 62, in a state where only the left door 60 is open and the right door 62 is closed as illustrated in Fig. 3, the buffer solution vessel 130, the cleaning fluid vessel 131, and the displacement solution vessel 132 in the second zone are inaccessible because the right door 62 is closed, whereas the detergent vessel 150 and the standard solution vessel 151 in the first zone are accessible because the left door 60 is open.

In contrast, in a state where only the right door 62 is open and the left door 60 is closed as illustrated in Fig. 4, the detergent vessel 150 and the standard solution vessel 151 in the first zone are inaccessible because the left door 60 is closed, whereas the buffer solution vessel 130, the cleaning fluid vessel 131, and the displacement solution vessel 132 in the second zone are accessible because the right door 62 is open.

The wall 23 is omitted in Figs. 3 and 4. Indeed, owing to the access control of the user by the left door 60 and the right door 62, a mixing-up of the reagents at the time of reagent replacement is sufficiently prevent, but combining the access control with the wall 23 that prevents contamination at the time of reagent replacement makes it possible to further improve the reliability of the analyzer.

In addition, as illustrated in Fig. 1, a guidance for replacement of system reagent may be displayed on the display 14. As an example of the guidance displayed on the display 14 after reading of the RFID, such an indication is cited that the left door 60 should be opened at the time of replacement of the detergent vessel 150 or the standard solution vessel 151 which are the system reagents for biochemical analysis. Opening the left door 60 pursuant to the guidance can prevent the user from accidentally accessing the buffer solution vessel 130, the cleaning fluid vessel 131, and the displacement solution vessel 132 which are the system reagent for immune analysis.

As illustrated in Fig. 5, the second area arranged on the lower side in the vertical direction of the first area including the biochemical analysis unit and the immune measurement unit 30 is set with a water system area 100 including the first zone and the second zone, and an electrical system area 105 partitioned from the water system area 100 via a wall 24. It is to be noted that the water system area 100 and the electrical system area 105 are not limited to one each, and there may be a plurality of water system areas 100 and a plurality of the electrical system areas 105 as long as the former areas and the latter areas are partitioned from each other by a wall.

The water system area 100 houses a first mechanism 120 related to a water circulation system, and the electrical system area 105 houses a second mechanism related to an electric system except a cable passing driving current.

The first mechanism 120 includes, in addition to the syringe 133 and the pumps 134, 135, at least one of the flow passages 136, 137, 138, 139, 155, 156, and 157 through which the first liquid or the second liquid flows, the electromagnetic valves 140, 141, 142, 143, 152, 153, and 154 in the flow passages 136, 137, 138, 139, 155, 156, and 157, or a flow passage for water from a water feeder port 102 for drawing water used in the reaction bath 52 into the automatic analyzer 1.

The second mechanism is configured to include the control apparatus 10 involving the controller 12, a power supply 17 of the control apparatus 10, a power supply port 107 for supplying power from the outside of the automatic analyzer 1 to the power supply 17, and the like.

Next, a flow when the user performs a replacement of the system reagent will be described with reference to Fig. 6. Hereinafter, the term "su" indicates each process performed by the user, and the term "ss" indicates each process executed by the controller 12.

First, when the user uses a GUI on the display 14 to request replacement of the system reagent (su1), the controller 12 causes the system reagent for which the replacement request has been received to shift to a replaceable state (ss1). Next, the controller 12 displays a guidance for reading the RFID of the system reagent on the display 14 (ss2).

After confirming the indication on the display 14, the user places an RFID tag of the system reagent vessel in front of the reader 18 (su2). When the RFID tag is placed in front of the reader 18, reading of reagent information is executed by the reader 18 (ss3), and the controller 12 causes the display 14 to display a guidance of a placement method corresponding to the read system reagent (ss4).

The user places or replaces the system reagent in accordance with the guidance displayed on the display 14 (su3). When the placement or replacement is completed, the user presses a registration completion button on the display 14 (su4). The controller 12 updates on-screen reagent information upon recognition of the registration completion button being pressed (ss5), and completes the replacement process.

Next, effects of the present embodiment will be described.

The automatic analyzer 1 of the present embodiment includes the biochemical analysis unit that analyzes the first group of analysis items; an immune measurement unit 30 that analyzes the second group of analysis items different from the first group of analysis items; an ISE measurement unit 58 that performs ISE analysis; and a housing 20 that houses the biochemical analysis unit, the immune measurement unit 30, and the ISE measurement unit 58. When the first area including the biochemical analysis unit, the immune measurement unit 30, and the ISE measurement unit 58, and the second area disposed on the lower side in the vertical direction of the first area are set, the second area is partitioned into the first zone that stores the detergent vessel 150 storing the first liquid used for analysis of the biochemical analysis unit and the standard solution vessel 151 that stores the standard solution used for measurement of the ISE measurement unit, and the second zone that stores the buffer solution vessel 130, the cleaning fluid vessel 131, and the displacement solution vessel 132 that store a second liquid used for analysis of the immune measurement unit 30.

Then, the detergent vessel 150, the standard solution vessel 151, the buffer solution vessel 130, the cleaning fluid vessel 131, and the displacement solution vessel 132 are disposed on the surface of the floorboard 22 constituting the bottom surface of the housing 20, or are arranged in horizontal positions to each other.

With such a configuration of the automatic analyzer 1, the arrangement areas of the system reagents are separated, which makes it possible to arrange the flow passages of the respective analysis items so as to be prevented from crossing with the flow passages of the other analysis items, thereby improving the maintainability. In addition, the operation at the time of replacement of each system reagent can be given a sense of unity, the burden on the user to remember the procedure can be reduced, and the reliability can be improved. Furthermore, for example, the distance for lifting a heavy bottle at the time of replacement is reduced, so that such advantageous effects are exhibited that the burden on the user can be reduced.

Also, the partition wall 23 is provided between the first zone and the second zone, which makes it possible to reliably prevent contamination of the reagent.

In addition, there are provided the first flow passages that connect the detergent vessel 150 and the standard solution vessel 151 to the biochemical analysis unit and the ISE measurement unit 58, and the second flow passages that connect the buffer solution vessel 130, the cleaning fluid vessel 131, and the displacement solution vessel 132 to the immune measurement unit 30, and the first flow passages and the second flow passages are arranged to be prevented from crossing each other, resulting in that even if a problem such as liquid leakage occurs, it is possible to reduce the influence on the other flow passages, which makes it possible to further improve maintainability of replacement or the like.

In addition, the left door 60 installed so as to allow the user to access the first zone but not to allow the user to access the second zone, and the right door 62 installed so as not to allow the user to access the first zone but to access the second zone are provided, making it possible to perform access from different doors, which results in that it is possible to more easily suppress a replacement error while maintaining the operational feeling of the conventional products.

In addition, the second area includes the electrical system area 105 partitioned from the water system area 100 via the wall 24, the water system area 100 stores the first mechanism 120 related to the water circulation system, and the electrical system area 105 stores the second mechanism related to the electric system other than the cable through which the drive current passes, thereby reducing the possibility of occurrence of trouble such as electric leakage as much as possible.

Further, there are provided the keyboard 15 and the mouse 16 that receive a user's input related to a replacement request of the detergent vessel 150, either one of the standard solution vessel 151 and the buffer solution vessel 130, the cleaning fluid vessel 131, and the displacement solution vessel 132, and the display 14 that displays a replacement procedure of the detergent vessel 150, either one of the standard solution vessel 151 and the buffer solution vessel 130, the cleaning fluid vessel 131, and the displacement solution vessel 132, which makes it possible for even a user who is not accustomed to the operation of the automatic analyzer 1 to perform replacement without hesitation, and usability can be further improved.

### List of Reference Signs

- 1: automatic analyzer
- 10: control apparatus (second mechanism)
- 12: controller (second mechanism)
- 13: storage (second mechanism)
- 14: display (display unit)
- 15: keyboard (input unit)
- 16: mouse (input unit)
- 17: power supply (second mechanism)
- 18: reader
- 20: housing
- 22: floorboard
- 23, 24: wall
- 25: sample disc
- 30: immune measurement unit (second analysis unit)
- 32: buffer solution nozzle
- 34: cleaning fluid nozzle
- 36: displacement solution nozzle
- 40: reagent disc
- 42: reagent dispenser mechanism
- 44: reagent probe cleaning bath
- 50: sample dispenser mechanism
- 52: reaction bath
- 54: sample probe cleaning bath
- 56: vessel cleaning mechanism
- 58: ISE measurement unit
- 59: syringe
- 60: left door (first door)
- 62: right door (second door)
- 100: water system area (first zone, second zone)
- 102: water feeder port (first mechanism)
- 105: electrical system area (third zone)
- 107: power supply port (second mechanism)
- 120: first mechanism
- 130: buffer solution vessel (second vessel)
- 131: cleaning fluid vessel (second vessel)
- 132: displacement solution vessel (second vessel)
- 133: syringe
- 134, 135: pump
- 136, 137, 138, 139: flow passage (second flow passage)
- 140, 141, 142, 143, 152, 153, 154: electromagnetic valve
- 150: detergent vessel (first vessel)
- 151: standard solution vessel (first vessel)
- 155, 156, 157: flow passage (first flow passage)
- 160: tray

## Claims

1. An automatic analyzer, comprising:
a first analysis unit for analyzing a first group of analysis items;
a second analysis unit for analyzing a second group of analysis items different from the first group of analysis items; and
a housing containing the first analysis unit and the second analysis unit,
wherein
when a first area including the first analysis unit and the second analysis unit, and a second area arranged vertically below the first area are configured,
the second area is partitioned into a first zone that houses a first vessel containing a first liquid used in analysis in the first analysis unit, and a second zone that houses a second vessel containing a second liquid used in analysis in the second analysis unit, and
the first vessel and the second vessel are arranged on a floorboard constituting an underside of the housing.

2. An automatic analyzer, comprising:
a first analysis unit for analyzing a group of biochemical analysis items;
a second analysis unit for analyzing a group of immune analysis items different from the group of biochemical analysis items; and
a housing containing the first analysis unit and the second analysis unit,
wherein
when a first area including the first analysis unit and the second analysis unit, and a second area arranged vertically below the first area are configured,
the second area is partitioned into a first zone that houses a first vessel containing a first liquid used in analysis in the first analysis unit, and a second zone that houses a second vessel containing a second liquid used in analysis in the second analysis unit.

3. An automatic analyzer, comprising:
a first analysis unit for analyzing a first group of analysis items;
a second analysis unit for analyzing a second group of analysis items different from the first group of analysis items; and
a housing containing the first analysis unit and the second analysis unit,
wherein
when a first area including the first analysis unit and the second analysis unit, and a second area arranged vertically below the first area are configured,
the second area is partitioned into a first zone that houses a first vessel containing a first liquid used in analysis in the first analysis unit, and a second zone that houses a second vessel containing a second liquid used in analysis in the second analysis unit, and
the first vessel and the second vessel are arranged in horizontal positions to each other.

4. The automatic analyzer according to any one of claims 1 to 3, further comprising a partition wall arranged between the first zone and the second zone.

5. The automatic analyzer according to any one of claims 1 to 3, further comprising:
a first flow passage connecting the first vessel and the first analysis unit; and
a second flow passage connecting the second vessel and the second analysis unit,
wherein the first flow passage and the second flow passage are arranged to be prevented from crossing each other.

6. The automatic analyzer according to any one of claims 1 to 3, further comprising:
a first door located to allow a user to access the first zone and to disallow the user to access the second zone; and
a second door located to disallow the user to access the first zone and to allow the user to access the second zone.

7. The automatic analyzer according to any one of claims 1 to 3, wherein
the second area further includes a third zone divided from at least one of the first zone and the second zone by a wall,
at least one of the first zone and the second zone accommodates a first mechanism related to a water circulation system, and
the third zone accommodates a second mechanism related to an electrical system except a cable for carrying drive current.

8. The automatic analyzer according to claim 7, wherein the first mechanism includes at least one of a liquid flow passage through which the first liquid or the second liquid flows, an electromagnetic valve located in the liquid flow passage, and a water flow passage through which water flows to be used in a reaction bath.

9. The automatic analyzer according to claim 1 or 2, wherein the first vessel and the second vessel are arranged in horizontal positions to each other.

10. The automatic analyzer according to any one of claims 1 to 3, further comprising:
an input unit used by a user to provide input related to a request for replacement of either the first vessel or the second vessel; and
a display unit for displaying a replacement procedure for either the first vessel or the second vessel.
